(19) Europäisches Patentamt
European Patent Office
Office européen des brevets

(11) Veröffentlichungsnummer: **0 036 080**
**B1**

(12) **EUROPÄISCHE PATENTSCHRIFT**

(45) Veröffentlichungstag der Patentschrift: **28.11.84**

(51) Int. Cl.³: **C 08 G 63/64**

(21) Anmeldenummer: **81101053.7**

(22) Anmeldetag: **14.02.81**

# (54) Aromatische Polyestercarbonate, Verfahren zu ihrer Herstellung und ihre Verwendung zur Herstellung von Spritzgussartikeln, Folien und Überzügen.

(30) Priorität: **01.03.80 DE 3007934**

(43) Veröffentlichungstag der Anmeldung:
**23.09.81 Patentblatt 81/38**

(45) Bekanntmachung des Hinweises auf die Patenterteilung:
**28.11.84 Patentblatt 84/48**

(84) Benannte Vertragsstaaten:
**DE FR GB IT NL**

(56) Entgegenhaltungen:
**EP-A-0 010 602**
**DE-A-2 714 544**
**DE-A-2 758 030**
**JP-A-34 099 276**

**Chemical Abstracts, p. 44, 85:22410r**

**Die Akte enthält technische Angaben, die nach dem Eingang der Anmeldung eingereicht wurden und die nicht in dieser Patentschrift enthalten sind.**

(73) Patentinhaber: **BAYER AG**
**Konzernverwaltung RP Patentabteilung**
**D-5090 Leverkusen 1 Bayerwerk (DE)**

(72) Erfinder: **Tacke, Peter, Dr.**
**Brandenburger Strasse 12**
**D-4150 Krefeld 1 (DE)**
Erfinder: **Freitag, Dieter, Dr.**
**Hasenheide 10**
**D-4150 Krefeld 1 (DE)**
Erfinder: **Nouvertné, Werner, Dr.**
**Scheiblerstrasse 95**
**D-4150 Krefeld 1 (DE)**
Erfinder: **Bottenbruch, Ludwig, Dr.**
**Woehlerstrasse 5**
**D-4150 Krefeld 1 (DE)**
Erfinder: **Müller, Peter Rolf, Dr.**
**Paul-Klee-Strasse 76**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 036 080 B1

**Beschreibung**

Die Erfindung betrifft thermoplastische aromatische Polyestercarbonate, deren Molekulargewicht mit speziellen Kettenabbrechern reguliert worden ist, eine Herstellungsmethode nach dem Phasengrenzflächenverfahren und die Verwendung dieser Polyestercarbonate zur Herstellung von Spritzgußartikeln, Folien und Überzügen.

Aromatische Polyestercarbonate sind bekannt (G.S. Kolesnikov et al., J. Polym. Science USSR, Vol. 9, 1967, S. 1705—1711; US 3030 331, 3169 121, 3409 704; DE—OS 2714 544, 2758 030). Sie können überall dort eingesetzt werden, wo eine Kombination der ausgezeichneten Eigenschaften von aromatischen Polycarbonaten (gute Schlag- und Kerbschlagzähigkeit, gute Fließfähigkeit der Schmelze) und rein aromatischen Polyestern (gute Wärmeformbeständigkeit) erwünscht ist.

Obwohl die bislang bekannten aromatischen Polyestercarbonate viele Anforderungen erfüllen, ist die Fachwelt daran interessiert, die Eigenschaften dieser Polymeren, insbesondere die Flißfähigkeit der Schmelze, weiter zu verbessern.

Es wurde überraschend gefunden, daß dies durch Verwendung spezieller Verbindungen zur Terminierung der Polyestercarbonate-Moleküle erreicht werden kann.

Gegenstand der Erfindung sind thermoplastische aromatische Polyestercarbonate auf Basis von Diphenolen, Tere- und/oder Isophthalsäure, Phosgen, Kettenabbrechern und gegebenenfalls Verzweigungsmitteln, mit einem Estergruppengehalt von 99,95 bis 5 Mol-%, bezogen auf die Summe von Ester- und Carbonat-Gruppen, dadurch gekennzeichnet, daß die Kettenabbrecher Verbindungen der Formel

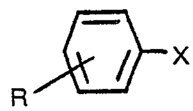

(I)

sind, worin

X für, OH, OCOCl oder COCl steht und

R einen verzweigten Alkylrest mit 8 bis 9 C-Atomen darstellt mit der Maßgabe, daß im Alkylrest R der Anteil von Methyl-Wasserstoffatomen, bezogen auf sämtliche Wasserstoffatome des Alkylrestes, 47—89% beträgt, daß R in p- oder in o- und p-Position steht und daß die Obergrenze des o-Isomerenanteiles 20% beträgt.

Ein weiterer Gegenstand der Erfindung ist die Verwendung der erfindungsgemäßen aromatischen Polyestercarbonate zur Herstellung von Spritzgußteilen, Folien und Überzügen.

Weiterer Gegenstand der Erfindung ist ein Verfahren zur Herstellung dieser Polyestercarbonate nach dem Zweiphasengrenzflächenverfahren, dadurch gekennzeichnet, daß man reaktionsfähige Terephthal- und/oder Isophthalsäurederivate, z.B. die Dichloride (oder deren Lösungen), die Verbindungen I (gegebenenfalls in einem Lösungsmittel) und das gerührte Zweiphasengemisch enthaltend alkalische wäßrige Diphenolatlösung, Katalysatoren und ein Lösungsmittel für das aromatische Polyestercarbonat sowie Phosgen miteinander vereinigt und zur Reaktion bringt.

Bevorzugte Diphenole für die Herstellung der erfindungsgemäßen Polyestercarbonate sind Verbindungen der Formel

$$HO—Z—OH \qquad (II)$$

worin Z einen zweiwertigen ein- oder mehrkernigen aromatischen Rest mit 6—30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel

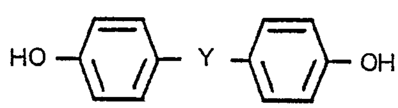

(III)

in der

Y eine Einfachbindung, einen Alkylen- oder Alkylidenrest mit 1—7 C-Atomen, einen Cycloalkylen- oder Cycloalkylidenrest mit 5—12 C-Atomen, —O—, —S—,

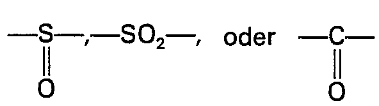

—SO₂—, oder

bedeutet, sowie deren kernalkylierte und kernhalogenierte Derivate, z.B.

Hydrochinon,

Resorcin,
Dihydroxidiphenyle,
Bis-(hydroxiphenyl)-alkane,
Bis-(hydroxiphenyl)-cycloalkane,
Bis-(hydroxiphenyl)-sulfide,
Bis-(hydroxiphenyl)-ether,
Bis-(hydroxiphenyl)-ketone
Bis-(hydroxiphenyl)-sulfoxide,
Bis-(hydroxiphenyl)-sulfone und
$\alpha,\alpha'$-Bis-(hydroxiphenyl)-diisopropylbenzole

sowie deren kernalkylierte und kernhalogenierte Verbindungen. Diese und weitere geeignete Diphenole sind z.B. in den US-Patentschriften 3 028 365, 3 275 601, 3 148 172, 30 62 781, 2 991 273, 3 271 367, 2 999 835, 2 970 131 und 2 999 846, in den deutschen Offenlegungsschriften 1 570 703, 2 063 050, 2 063 052, 2 211 956, 2 211 957, der französischen Patentschrift 1 561 518 und in der Monographie "H. Schnell, Chemistry and Physics of Polycarbonates, Interscience Publishers, New York, 1964" beschrieben.

Die wichtigsten Diphenole seien nachfolgend namentlich aufgezählt:

Bisphenol A = 2,2 - Bis - (4,4 - dihydroxi - diphenyl) - propan, Tetramethylbisphenol A, 1,1 - Bis - (4 - hydroxiphenyl) - isobutan, 1,1 - Bis - (4 - hydroxiphenyl) - cyclohexan, 4,4' - Dihydroxidiphenylsulfid, 4,4' - Dihydroxidiphenyl, 4,4' - Dihydroxidiphenylsulfon sowie deren di- und tetrahalogenierten Derivate. Besonders bevorzugt ist Bisphenol A. Es können auch beliebige Mischungen der genannten Diphenole verwendet werden.

Die als Kettenabbrecher und damit zur Regelung des Molekulargewichtes einzusetzenden Verbindungen der Formel I sind bekannt (vgl. z.B. J. Amer. Chem. Soc. *56*, 1583—1586 (1934)) oder können auf einfache Weise hergestellt werden.

Erfindungsgemäß bevorzugte Verbindungen der Formel (I) sind beispielsweise

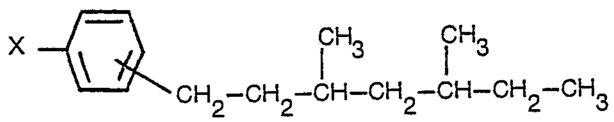

und

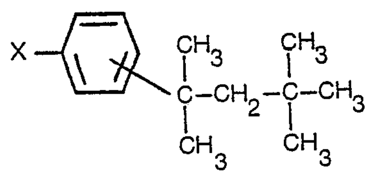

Für die Herstellung der erfindungsgemäßen aromatischen Polyestercarbonate können sowohl eine als auch Gemische der Verbindungen I eingesetzt werden.

Sie werden in Mengen von 0,1 bis 10 Mol-%, vorzugsweise 0,3 bis 7 Mol-% (im Falle von Phenolen bezogen auf Diphenole, im Falle von Säurechloriden und Chlorkohlensäureestern bezogen auf Säuredichloride) verwendet.

Als Verzweigungsmittel können beispielsweise 3- oder mehrfunktionelle Carbonsäurechloride, wie Trimesinsäuretrichlorid, Cyanursäuretrichlorid, 3,3', 4,4'-Benzophenon-tetracarbonsäuretetrachlorid, 1,4,5,8-Naphthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6 - Dimethyl - 2,4,6 - tri - (4 - hydroxiphenyl) - hepten - 2,4,6 - Dimethyl - 2,4,6 - tri - (4 - hydroxiphenyl) - heptan, 1,3,5 - Tri - (4 - hydroxiphenyl) - benzol, 1,1,1 - Tri - (4 - hydroxiphenyl) - ethan, Tri - (4 - hydroxiphenyl) - phenylmethan, 2,2 - Bis[4,4 - bis - (4 - hydroxi - phenyl) - cyclohexyl] - propan, 2,4 - Bis - (4 - hydroxiphenyl - isopropyl) - phenol, Tetra - (4 - hydroxiphenyl)methan, 2,6 - Bis - (2 - hydroxi - 5 - methyl - benzyl) - 4 - methyl - phenol, 2 - (4 - Hydroxiphenyl) - 2 - (2,4 - dihydroxiphenyl) - propan, Tetra - (4 - [4 - hydroxiphenyl - isopropyl] - phenoxi) - methan, 1,4 - Bis - [(4,4'' - dihydroxitriphenyl) - methyl] - benzol in Mengen von 0,01 bis 1,0 Mol-% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

Die Herstellung der erfindungsgemäßen aromatischen Polyestercarbonate erfolgt vorzugsweise nach dem Phasengrenzflächenverfahren, das beispielsweise durch V. V. Korshak und S. V. Vinogradova in "Polyesters", Pergamon Press, 1965, S. 448, beschrieben ist. Die Polykondensation kann auch in einem Lösungsmittel in Gegenwart zumindest stöchiometrischer Mengen tertiärer Amine zum Binden des freigesetzten Halogenwasserstoffes durchgeführt werden. Dieses Verfahren ist z.B. in der DE—OS 2 714 544 beschrieben.

Bei Anwendung des Phasengrenzflächenverfahrens werden die Diphenole in wäßrig-alkalischer Phase gelöst. In diese Lösung können zur Vermeidung von Verfärbungen der Polyestercarbonate geringe Mengen, wie beispielsweise 0,1 bis 1 Gew.-% (bezogen auf eingesetzte Diphenole), reduzierender alkalischer Substanzen, wie Natriumborhydrid oder Natriumsulfit, eingetragen werden.

Als Katalysatoren für die Polykondensationsreaktion können der wäßrig alkalischen Phase 0,01 bis 5 Mol-% (bezogen auf eingesetzte Diphenole) eines oder mehrerer tertiärer Amine und/oder quartärer Ammonium- und/oder Phosphiniumverbindungen zugesetzt werden.

Als Katalysatoren bevorzugte Ammonium- bzw. Phosphoniumverbindungen entsprechen der Formel

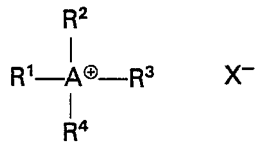

worin

A ein Stickstoff- oder Phosphoratom,

X Chlor oder Brom und

$R^1$, $R^2$, $R^3$, $R^4$ $C_1$—$C_{20}$-Alkyl, $C_6$—$C_{10}$-Cycloalkyl, $C_7$—$C_{30}$-Alkaryl oder -Aralkyl bedeuten, wobei zwei Substituenten zusammen für eine $C_4$—$C_{12}$-Alkylengruppe stehen können.

Bevorzugte tertiäre Amine entsprechen der Formel

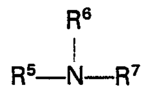

worin $R^5$, $R^6$, $R^7$ $C_1$—$C_{20}$-Alkyl oder $C_6$—$C_{10}$-Cycloalkyl bedeuten, wobei auch zwei Substituenten zusammen für eine Alkylengruppe mit 4 bis 12 C-Atomen stehen können.

Als Lösungsmittel für die Verbindungen I, die Terephthal- bzw. Isophthalsäuredichloride und die aromatischen Polyestercarbonate können die von der Polycarbonatherstellung bekannten organischen Lösungsmittel, wie z.B. Dichlormethan, Chloroform, Tri- und Tetrachlorethylen, Tetrachlorethane, Chlorbenzole, Dichlorbenzole und Gemische dieser Verbindungen eingesetzt werden.

Die Herstellung der erfindungsgemäßen Polyestercarbonate erfolgt vorzugsweise unter intensivem Rühren bei Temperaturen von 0 bis 40, insbesondere 15 bis 30°C.

Die Isolierung der erfindungsgemäßen aromatischen Polyestercarbonate kann nach der von der Polycarbonatsynthese nach dem Zweiphasengrenzflächenverfahren bekannten Methode erfolgen.

Hierbei wird die organische, das Polyestercarbonat gelöst enthaltende Phase abgetrennt, gewaschen und anschließend das Polyestercarbonat durch Eindampfen der Lösung isoliert, wobei als Endstufe des Aufarbeitungsprozesses vorzugsweise ein Ausdampfextruder benutzt wird.

Sowohl der Ester- als auch der Carbonatanteil der erfindungsgemäßen aromatischen Polyestercarbonate kann in Form von Blöcken oder statistisch verteilt im Polymeren vorliegen.

Bei Anwendung des Phasengrenzflächenverfahrens kann zur Herstellung von Polyestercarbonaten mit Polyesterblöcken beispielsweise zunächst eine alkalische wäßrige Lösung eines oder mehrerer Diphenole mit einer Lösung eines oder mehrerer aromatischer Dicarbonsäuredichloride zu einem Vorkondensat mit phenolischen OH-Endgruppen umgesetzt und das Vorkondensat durch anschließende Einleitung von Phosgen zum Polyestercarbonat weiterkondensiert werden. Die Länge der Polyesterblöcke läßt sich durch geeignete Wahl des Molverhältnisses von Diphenol und Säurechlorid einstellen.

Analog erhält man Polyestercarbonate mit Polycarbonatblöcken, wenn oligomere Carbonate mit phenolischen OH-Endgruppen mit den aromatischen Dicarbonsäuredichloriden zur Reaktion gebracht werden.

Polyestercarbonate mit statistischer Verteilung der Ester- der Carbonat-Gruppierungen sind durch gleichzeitige Dosierung von Säurechlorid und Phosgen zur Diphenolat-Lösung zugänglich.

Die erfindungsgemäß zu verwendenden Kettenabbrecher können, soweit es sich um phenolische Verbindungen handelt, dem Reaktionsgemisch vor Beginn oder während der Reaktion zugesetzt werden. Es muß jedoch noch genügend Säurechlorid und/oder Phosgen zur Verfügung stehen, damit sie reagieren und die Kette begrenzen können; z.B., kann der Kettenabbrecher zusammen mit dem Diphenol eingesetzt werden, in der Lösung der Chloride der aromatischen Dicarbonsäuren enthalten sein oder dem Reaktionsgemisch nach Herstellung eines Vorkondensates zugesetzt werden.

Sofern man als Kettenabbrecher Säurechloride und Chlorkohlensäureester verwendet, werden sie vorzugsweise gemeinsam mit den aromatischen Dicarbonsäuredichloriden und/oder dem Phosgen eingesetzt.

Diese Kettenabbrecher können dem Reaktionsgemisch auch noch zu einem Zeitpunkt zugesetzt werden, wenn die Chloride der Dicarbonsäuren und das Phosgen schon weitgehend oder vollständig abreagiert haben.

Die erfindungsgemäßen aromatischen Polyestercarbonate zeigen im Vergleich zu den üblicherweise mit Phenol, o-Phenylphenol, p-Phenylphenol, Dimethylphenolen, Kresolen, Halogenphenolen oder p-tert.-Butylphenol als Molekulargewichtsregler hergestellten aromatischen Polyestercarbonaten eine verbesserte Farbzahl, eine wesentlich verbesserte Fließfähigkeit, eine erhöhte Wärmeformbeständigkeit sowie eine verbesserte Zähigkeit bei vergleichbaren mechanischen Eigenschaften.

Die erfindungsgemäßen aromatischen Polyestercarbonate besitzen in der Regel relative Lösungsviskositäten von 1,18 bis 2,0, insbesondere von 1,2 bis 1,5 (gemessen in einer Lösung von 0,5 g Polykondensat in 100 ml Dichlormethanlösung bei 25°C).

Sie können Stabilisatoren, wie beispielsweise Antioxydantien, UV-Stabilisatoren, Fließ- und Entformungshilfsmittel oder andere Additive sowie Füllstoffe wie Glasfasern, Glaskugeln, Asbest- oder Kohlenstofffasern, Kieselgur, Kaolin, Mineralfasern, Gesteinmehl und Pigmente enthalten.

Die nach dem erfindungsgemäßen Herstellungsverfahren erhaltenen aromatischen Polyestercarbonate werden nach der Extrusion als einheitliches Granulat erhalten und können durch Spritzgiessen zu Formkörpern verarbeitet werden. Sie sind ebenfalls zur Herstellung von Folien und Überzügen geeignet.

In den nachfolgenden Beispielen ist die relative Lösungsviskosität $\eta$ rel in Dichlormethan bei 25°C und einer Konzentration von 0,5 g Polykondensat in 100 ml Dichlormethanlösung bestimmt.

## Beispiele

Beschreibung der Meßmethode zur Beurteilung der Fließfähigkeit

Auf einer Spritzgußmaschine des Typs SKM 141 (Hersteller: Fa. "Stübbe") werden unter einem Druck von 1050 bar und bei einer bestimmten Extrusionstemperatur spiralenförmige Streifen mit den Abmessungen 2 mm x 20 mm hergestellt, wobei der Querschnitt des Strangangusses 10 $mm^2$ beträgt. Der Zylinder der Spritzgußmaschine hat einen Durchmesser von 40 cm.

Die Länge der resultierenden Fließspirale ist ein Maß für die Fließfähigkeit des extrudierten Polyesters, wobei die Länge der Fließspirale, direkt proportional der Fließfähigkeit des Polyesters ist.

Beschreibung der Methode zur Messung der Farbzahl

*Spektroskopische Farbzahlbestimmung*

Granulat des aromatischen Polyesters, dessen Farbzahl bestimmt werden soll, wird in Dichlormethan gelöst (Konzentration 4 g/100 ml). Die Messungen werden in einer Schichtdicke von 10 cm mit einem Spektrometer des Typs "Cary 219" der Fa. Cary, USA, aufgeführt.

Vergleichend gegen reines Dichlormethan wird die Lichttransmission I bei einer Wellenlänge von 420 nm und die Lichttransmission $I_o$ bei einer Wellenlänge von 700 nm gemessen. Die Farbzahl des Granulats, gemessen bei 420 nm, errechnet sich nach der Gleichung:

$$FZ_{(420\ nm)} = 11,5 \times \log \frac{I_o}{I}$$

Bestimmung von Kerbschlagzähigkeit und Schlagzähigkeit

Die Prüfung der Kerbschlagzähigkeit $a_k$ nach Charpy und der Schlagzähigkeit $a_n$ nach Charpy erfolgt gemäß DIN 53 453.

Vergleichsbeispiel 1

In einen Stahlkessel mit intensiv wirkendem Rührer wurden unter Stickstoffatmosphäre, 2,736 kg Bisphenol A (BPA), 1,5 1 45 gew.-%ige wäßrige Natronlauge, 8,4 g Natriumborhydrid, 120 g Triethylbenzylammoniumchlorid, 36 l Wasser und 22 l Dichlormethan gefüllt und das Gemisch bis zur vollständigen Lösung des BPA gerührt.

In das intensiv gerührte Zweiphasengemisch wurde dann unter Wasserkühlung innerhalb 15 Minuten eine Lösung aus je 852,72 g Iso- und Terephthalsäurechlorid und 39,5 g (3,5 Mol-%) Phenol, gelöst in 3 l Dichlormethan, gegeben und 1 Stunde nachgerührt. Die Temperatur des Reaktionsgemisches überstieg dabei nicht 22°C. Durch Zugabe von Natriumhydroxid wurde der pH-Wert des Gemisches bei 12—13 gehalten.

Unter fortgesetztem Rühren erfolgte die Einleitung von 600 g Phosgen, wobei die Temperatur wieder bei ca. 20°C und der pH-Wert bei 12—13 gehalten wurden. Nach der Einleitung des Phosgens wurden 120 ml einer 4 gew.-%igen wäßrigen Lösung von Triethylamin zugesetzt und noch 1 Stunde nachgerührt.

Nach Abtrennung der wäßrig-alkalischen Phase wurde die organische Phase zunächst mit verdünnter Phosphorsäure, dann mit Wasser salzfrei gewaschen und ca. 50% des Dichlormethans unter Normaldruck abdestilliert. Die verbliebene Lösung wurde mit 15 l Chlorbenzol verdünnt und die Abdestillation des Dichlormethans fortgesetzt, bis die Sumpftemperatur ca. 80°C betrug, das Polyestercarbonat sodann im Vakuumextruder bei 320°C vom Chlorbenzol befreit, als Strang abgezogen und granuliert. Das Granulat besaß eine relative Lösungsviskosität $\eta$ rel von 1,262.

Vergleichsbeispiel 2

Analog Vergleichsbeispiel 1 wurde ein Polyestercarbonat mit 63 g (3,5 Mol-%) p-tert.-Butylphenol (statt Phenol) als Kettenabbrecher hergestellt. Die relative Lösungsviskosität $\eta$ rel des Produktes betrug 1,258.

Beispiele 1 + 2 (erfindungsgemäß)

Analog Vergleichsbeispiel 1 wurden Polyestercarbonate mit 86,7 g p-Isooctylphenol bzw. 92,5 g (87% p-Anteil, 13% o-Anteil) Isononylphenol (jeweils 3,5 Mol-% Kettenabbrecher) hergestellt. Die relative Lösungsviskosität $\eta$ rel betrug 1,265 bzw. 1,259.

Vergleichsbeispiel 3

Wie bei Vergleichsbeispiel 1 beschrieben, wurden 2,736 kg BPA, 1,5 l 45 gew.-%iger Natriumlauge, 8,4 g Natriumborhydrid, 180 g Triethylbenzylammoniumchlorid, 39,5 g Phenol, 36 l Wasser und 22 l Dichlormethan im Stahlkessel bis zur Lösung des BPA gerührt.

In das kräftig gerührte Zweiphasengemisch wurden dann gleichzeitig innerhalb 15 Minuten eine Lösung aus je 365,46 g Iso- und Terephthalsäurechlorid, gelöst in 3 l Dichlormethan, und 1450 g Phosgen eingetragen bzw. eingeleitet, wobei die Temperatur des Gemisches 22°C nicht überschritt und der pH-Wert bei 12—13 lag (Kühlung, Zusatz von Natriumhydroxid).

Der Dosierung der Säurechloride schloß sich die Zugabe von 120 ml einer 4 gew.-%igen wäßrigen Lösung von Triethylamin an, worauf noch 1 Stunde kräftig nachgerührt wurde.

Die Aufarbeitung des Ansatzes erfolgte, wie bei Vergleichsbeispiel 1 beschrieben. Das erhaltene Granulat besaß eine relative Lösungsviskosität $\eta$ rel von 1,251.

Beispiel 3 (erfindungsgemäß)

Analog Vergleichsbeispiel 3 wurde ein Polyestercarbonat unter Verwendung von 86,7 g p-Isooctylphenol (3,5 Mol-%) an Stelle von Phenol hergestellt. Das Isooctylphenol war in der Lösung der Säurechloride enthalten. Das Granulat des Cokondensates besaß eine relative Lösungsviskosität $\eta$ rel = 1,255.

Vergleichsbeispiel 4

Analog Vergleichsbeispiel 1 wurden 2,736 kg BPA, 1,5 l 45 gew.-%ige Natronlauge, 180 g Triethylbenzylammoniumchlorid, 8,4 g Natriumborhydrid, 36 l Wasser und 22 l Dichlormethan bis zur vollständigen Lösung des BPA gerührt. In das Gemisch wurde dann unter kräftigem Rühren eine Lösung aus je 1096,38 g Iso- und Terephthalsäurechlorid und 67,86 g p-tert.-Butylphenol (3,77 Mol-%) in 3 l Dichlormethan innerhalb 15 Minuten eingetragen. Nach einer Nachrührzeit von 1 Stunde wurden während 10 Minuten 215 g Phosgen eingeleitet. Der pH-Wert wurde hierbei wie bei der 1. Stufe der Reaktion mit Natriumhydroxid bei 12—13, die Temperatur durch Kühlung unterhalb 22°C gehalten. Die Nachreaktion dauerte 1 Stunde. Es wurde zusätzlich kein teriäres Amin als Katalysator verwendet. Das nach der üblichen Aufarbeitung des Ansatzes erhaltene Granulat besaß eine relative Lösungsviskosität $\eta$ rel = 1,248.

Beispiel 4 (erfindungsgemäß)

Die in Vergleichsbeispiel 4 beschriebene Umsetzung wurde wiederholt, jedoch an Stelle von p-tert.-Butylphenol 93,3 g (3,77 Mol-%) p-Isooctylphenol verwendet. Das Produkt zeigte eine relative Lösungsviskosität $\eta$ rel von 1,246.

Vergleichsbeispiel 5

Nach Art von Vergleichsbeispiel 1 wurden 2,736 kg BPA, 1,5 l 45 gew.-%ige Natronlauge, 44,5 g Triphenylethyl-phosphoniumbromid, 8,4 g Natriumborhydrid, 36 l Wasser und 22 l Dichlormethan bis zur vollständigen Lösung des BPA gerührt, sodann gleichzeitig eine Lösung aus je 609,1 g Iso- und Terephthalsäurechlorid und 39,5 g (3,5 Mol-%) Phenol gelöst, in 3 l Dichlormethan, zugegeben und 900 g Phosgen innerhalb 20 Minuten eingeleitet. Die Nachkondensation erfolgte während 1 Stunde nach Zusatz von 120 ml 4 gew.-%iger Triethylamin-Lösung. Nach der üblichen Aufarbeitung (Vergleichsbeispiel 1) besaß das erhaltene Granulat eine relative Lösungsviskosität $\eta$ rel von 1,258.

Beispiel 5 (erfindungsgemäß)

Analog Vergleichsbeispiel 5 wurde ein Cokondensat unter Verwendung von 92,5 g (3,05 Mol-%) Isononylphenol (87% p-Isomeres, 13% o-Isomeres) anstelle von Phenol hergestellt. Die relative Lösungsviskosität $\eta$ rel des Produktes lag bei 1,256.

Vergleichsbeispiel 6

Analog Vergleichsbeispiel 1 wurden 2,736 kg BPA, 1,5 l 45 gew.-%ige Natronlauge, 100 g Triethylbenzylammoniumchlorid, 8,4 g Natriumborhydrid, 36 l Wasser und 22 l Dichlormethan bis zur vollständigen Lösung des BPA gerührt. Während 20 Minuten wurden unter kräftigem Rühren eine Lösung aus 73 g Tere- und 171 g Isophthalsäurechlorid sowie gleichzeitig 63 g (3,5 Mol-%) p-tert. Bu-

tylphenol, gelöst in 3 l Dichlormethan, hinzugegeben und 1600 g Phosgen eingeleitet. Nach Zusatz von 120 ml 4 gew.-%iger Triethylamin-Lösung reagierte das Reaktionsgemisch 1 Stunde nach. Das granulierte Cokondensatz zeigte eine relative Lösungsviskosität $\eta$ rel von 1,265.

Beispiel 6 (erfindungsgemäß)

Zur Herstellung eines erfindungsgemäßen Polyestercarbonats wurde analog Vergleichsbeispiel 6 verfahren, jedoch das p-tert.-Butylphenol durch 86,7 g p-Isooctylphenol ersetzt. Die relative Lösungsviskosität $\eta$ rel des Produktes betrug 1,268.

Tabellarischer Eigenschaftsvergleich der aromatischen Polyestercarbonate

| Versuch | Kerbschlagzähigkeit $a_k$ (KJ/m$^2$) | Wärmeformbeständigkeit nach Vicat B | Farbzahl | Fließspirale [cm] |
|---|---|---|---|---|
| Vergl. 1 | 18,7 | 177°C | 18,3 | 19,6 |
| Vergl. 2 | 19,1 | 178°C | 15,6 | 20,3 |
| Beisp. 1 | 22,3 | 183°C | 8,1 | 32,8 |
| Beisp. 2 | 23,5 | 183°C | 7,8 | 33,2 |
| Vergl. 3 | 16,9 | 152°C | 17,5 | 22,5 |
| Beisp. 3 | 21,4 | 155°C | 6,3 | 31,7 |
| Vergl. 4 | 17,6 | 182°C | 19,7 | 21,4 |
| Beisp. 4 | 19,3 | 185°C | 7,4 | 29,9 |
| Vergl. 5 | 18,3 | 157°C | 20,6 | 21,1 |
| Beisp. 5 | 21,8 | 161°C | 8,3 | 32,3 |
| Vergl. 6 | 35,7 | 150°C | 21,2 | 18,7 |
| Beisp. 6 | 39,3 | 152°C | 9,1 | 29,2 |

Beim Schlagzähigkeitstest erhielten alle Proben die Bewertung "nicht gebrochen".

**Patentansprüche**

1. Thermoplastische aromatische Polyestercarbonate auf Basis von Diphenolen, Tere- und/oder Isophthalsäure, Phosgen, Kettenabbrechern und gegebenenfalls Verzweigungsmitteln, mit einem Estergruppengehalt von 99,95 bis 5 Mol-%, bezogen auf die Summe von Ester- und Carbonatgruppen, dadurch gekennzeichnet, daß die Kettenabbrecher Verbindungen der Formel

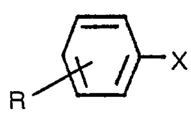

(I)

sind, worin

X für OH, OCOCl oder COCl steht und

R einen verzweigten Alkylrest mit 8 bis 9 C-Atomen darstellt mit der Maßgabe, daß im Alkylrest R der Anteil von Methyl-Wasserstoffatomen, bezogen auf sämtliche Wasserstoffatome des Alkylrestes, 47 bis 89% beträgt, daß R in p- oder in o- und p-Position steht und daß die Obergrenze des o-Isomerenanteiles 20% beträgt.

2. Polyestercarbonate nach Anspruch 1, dadurch gekennzeichnet, daß sie eine relative Lösungsviskosität von 1,18 bis 2,0 besitzen. (0,5 g Polykondensat in 100 ml Dichlormethanlösung; 25°C).

3. Polyestercarbonate nach Ansprüchen 1 und 2, dadurch gekennzeichnet, daß sie eine relative Lösungsviskosität von 1,2 bis 1,5 besitzen.

4. Polyestercarbonate nach Ansprüchen 1—2, dadurch gekennzeichnet, daß die Kettenabbrecher aus den Verbindungen

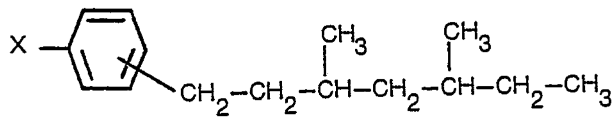

und

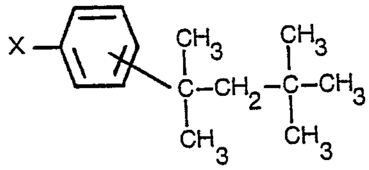

ausgewählt sind.

5. Verfahren zur Herstellung der Polyestercarbonate nach Ansprüchen 1—4 nach dem Zweiphasengrenzflächenverfahren, dadurch gekennzeichnet, daß man die Terephthal- und/oder Isophthalsäuredichloride (oder deren Lösungen), die Verbindungen I (gegebenenfalls in einem Lösungsmittel) und das gerührte Zweiphasengemisch enthaltend alkalische wäßrige Diphenolatlösung, Katalysatoren und ein Lösungsmittel für das aromatische Polyestercarbonat sowie Phosgen miteinander vereinigt und zur Reaktion bringt.

6. Verfahren nach Anspruch 5, dadurch gekennzeichnet, daß man die Verbindungen I und die Tere- und/oder Isophthalsäuredichloride gemeinsam in das Reaktionsgemisch einbringt.

7. Verfahren nach Anspruch 5, dadurch gekennzeichnet, daß man die Verbindungen I in Mengen von 0,1 bis 10 Mol-%, bezogen auf Diphenol, einsetzt.

8. Verfahren nach Ansprüchen 5 und 6, dadurch gekennzeichnet, daß man die Verbindungen I in Mengen von 0,3 bis 7 Mol-% einsetzt.

9. Verfahren nach Ansprüchen 5—7, dadurch gekennzeichnet, daß man die Reaktion bei Temperaturen von 0 bis 40°C ausführt.

10. Verwendung der Polyestercarbonate nach Ansprüchen 1—4 zur Herstellung von Spritzgußartikeln, Folien und Überzügen.

**Claims**

1. Thermoplastic aromatic polyester carbonates based on diphenols, terephthalic and/or isophthalic acid, phosgene, chain terminators and optionally branching agents, having an ester group content of 99.95 to 5 mol %, based on the sum of ester and carbonate groups, characterised in that the chain terminators are compounds of the formula

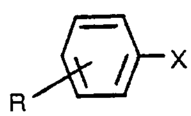

(I)

wherein

X represents OH, OCOCl or COCl and

R represents a branched alkyl radical with 8 to 9 C atoms, with the proviso that in the alkyl radical R the proportion of methyl-hydrogen atoms, based on all the hydrogen atoms of the alkyl radical, is 47 to 89%, that R is in the p- or in the o- and p-position and that the upper limit of the proportion of the o-isomer is 20%.

2. Polyester carbonates according to Claim 1, characterised in that they have a relative solution viscosity of 1.18 to 2.0 (0.5 g of polycondensate in 100 ml of dichloromethane, 25°C).

3. Polyester carbonates according to Claims 1 and 2, characterised in that they have a relative solution viscosity of 1.2 to 1.5.

4. Polyester carbonates according to Claims 1—2, characterised in that the chain terminators are selected from the compounds

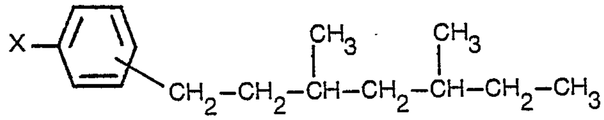

and

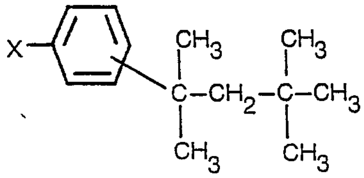

5. Process for the preparation of the polyester carbonates according to Claims 1—4 by the two-phase boundary surface process, characterised in that the terephthalic and/or isophthalic acid dichlorides (or solutions thereof), the compounds I (optionally in a solvent) and the stirred two-phase mixture containing alkaline aqueous diphenolate solution, catalysts and a solvent for the aromatic polyester carbonate and phosgene are combined together and reacted.

6. Process according to Claim 5, characterised in that the compounds I and the terephthalic and/or isophthalic acid dichlorides are introduced together into the reaction mixture.

7. Process according to Claim 5, characterised in that the compounds I are used in quantities of 0.1 to 10 mol %, based on diphenol.

8. Process according to Claims 5 and 6, characterised in that the compounds I are used in quantities of 0.3 to 7 mol %.

9. Process according to Claims 5—7, characterised in that the reaction is carried out at temperatures of 0 to 40°C.

10. Use of the polyester carbonates according to Claims 1—4 for the production of injection-moulded articles, films and coatings.

**Revendications**

1. Polyestercarbonates aromatiques thermoplastiques à base de diphénols, d'acide téréphtalique et/ou d'acide isophtalique, de phosgène, d'agents de terminaison de chaîne et, le cas échéant, d'agents de ramification, ayant une teneur en groupes ester de 99,95 à 5 moles % par rapport à la somme des groupes ester et des groupes carbonate, caractérisés en ce que les agents de terminaison de chaîne sont des composés de formule

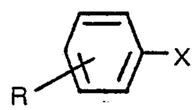

(I)

dans laquelle

X représente OH, OCOCl ou COCl et

R est un reste alkyle ramifié ayant 8 ou 9 atomes de carbone, sous réserve que dans le reste alkyle R, la proportion d'atomes d'hydrogène de méthyle, par rapport à tous les atomes d'hydrogène du reste alkyle, ait une valeur de 47 à 89%, que R soit en position para ou en positions ortho et para et que la limite supérieure de la proportion d'isomère ortho soit de 20%.

2. Polyestercarbonates suivant la revendication 1, caractérisés en ce qu'ils ont une viscosité relative en solution de 1,18 à 2,0 (0,5 g de polycondensat dans 100 ml de solution de dichlorométhane à 25°C).

3. Polyestercarbonates suivant les revendications 1 et 2, caractérisés en ce qu'ils ont une viscosité relative en solution de 1,2 à 1,5.

4. Polyestercarbonates suivant les revendications 1 et 2, caractérisés en ce que les agents de terminaison de chaîne sont choisis entre les composés

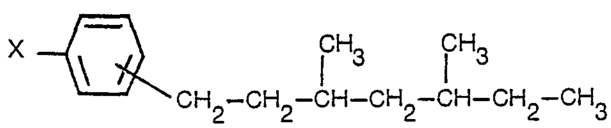

et

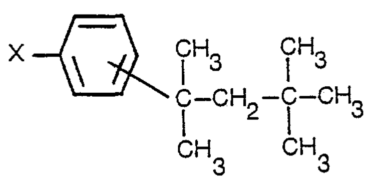

5. Procédé de production des polyestercarbonates suivant les revendicatons 1 à 4 par le procédé à l'interface entre deux phases, caractérisé en ce qu'on réunit les dichlorures d'acide téréphtalique et/ou d'acide isophtalique (ou leurs solutions), les composés I (éventuellement dans un solvant) et le mélange de deux phases sous agitation contenant une solution aqueuse alcaline de diphénolate, des catalyseurs et un solvant pour le polyestercarbonate aromatique ainsi que du phosgène et on les fait réagir.

6. Procédé suivant la revendication 5, caractérisé en ce qu'on introduit en commun dans le mélange réactionnel les composés I et les dichlorures d'acide téréphtalique et/ou d'acide isophtalique.

7. Procédé suivant la revendication 5, caractérisé en ce qu'on utilise les composés I en quantités de 0,1 à 10 moles % par rapport au diphénol.

8. Procédé suivant les revendications 5 et 6, caractérisé en ce qu'on utilise les composés I en quantités de 0,3 à 7 moles %.

9. Procédé suivant les revendications 5—7, caractérisé en ce qu'on conduit la réaction à des températures de 0 à 40°C.

10. Utilisation des polyestercarbonates suivant les revendications 1 à 4 pour la production d'articles moulés par injection, de feuilles et de revêtements.